# EUROPÄISCHE PATENTSCHRIFT

(11) **EP 3 018 392 B1**
(45) Veröffentlichungstag und Bekanntmachung des Hinweises auf die Patenterteilung: **04.01.2017**
(21) Anmeldenummer: 14003726.8
(22) Anmeldetag: 05.11.2014
(51) Int. Cl.: F16K 31/06

(54) **Elektromagnetischer Ventilantrieb, Verfahren zu seiner Herstellung und damit ausgestattetes Magnetventil**
Electromagnetic valve drive, method for producing the same, and solenoid valve equipped with the same
Mécanisme de distribution électromagnétique, son procédé de fabrication et électrovanne en étant équipée

(43) Veröffentlichungstag der Anmeldung: 11.05.2016
(73) Patentinhaber: FESTO AG & Co. KG, 73734 Esslingen (DE)
(72) Erfinder: Gerhartz, Jürgen, D-73207 Plochingen (DE); Heiml, Roland, A-4870 Vöcklamarkt (AT)
(74) Vertreter: Patentanwälte Magenbauer & Kollegen Partnerschaft mbB

(56) Entgegenhaltungen:
- EP-B1- 2 016 319
- WO-A2-2005/008113
- DE-A1- 4 224 470

## Beschreibung

Die Erfindung betrifft einen elektromagnetischen Ventilantrieb, mit einer ferromagnetischen Jochstruktur, die einen H-förmig gestalteten Spulenträger mit zwei sich in Achsrichtung einer imaginären Spulenträger-Hauptachse beabstandet gegenüberliegenden seitlichen Jochplatten und einen die seitlichen Jochplatten verbindenden, sich in Achsrichtung der Spulenträger-Hauptachse erstreckenden Jochkern aufweist, wobei zwischen den beiden seitlichen Jochplatten eine den Jochkern umschließende bestrombare Spule angeordnet ist, die in einem Bereich ihres Außenumfanges von zwei jeweils mit einer der seitlichen Jochplatten fest verbundenen Polschuhplatten flankiert ist, die in der Achsrichtung der Spulenträger-Hauptachse einander zugewandte, zwischen sich einen Zwischenraum definierende innere Stirnflächen aufweisen, wobei an der der Spule radial abgewandten Außenseite der beiden Polschuhplatten ein den Zwischenraum überbrückendes, durch elektrische Ansteuerung der Spule zu einer quer zu der Spulenträger-Hauptachse orientierten Arbeitsbewegung antreibbares Ankerelement angeordnet ist.

Die Erfindung betrifft ferner ein Verfahren zur Herstellung eines solchen elektromagnetischen Ventilantriebes und außerdem ein mit einem solchen elektromagnetischen Ventilantrieb ausgestattetes Magnetventil.

Aus der WO 2005/008113 A2 ist ein elektromagnetischer Ventilantrieb der vorgenannten Art bekannt, der über eine ferromagnetische Jochstruktur verfügt, die sich aus zwei L-förmigen Jochelementen und einem sich zwischen zwei gegenüberliegenden Schenkeln der Jochelemente erstreckenden Jochkern zusammensetzt. Auf den Jochkern ist eine auf einen eigenen Tragkörper aufgewickelte Spule aufgesteckt, die von den mit dem Jochkern verbundenen L-Schenkeln der beiden Jochelemente stirnseitig flankiert ist. Die beiden anderen L-Schenkel der Jochelemente fungieren als Polschuhplatten und überlappen die Spule in einem Bereich ihres Außenumfanges unter Belassung eines Zwischenraumes. An der der Spule radial abgewandten Außenseiten der beiden Polschuhplatten befindet sich ein bewegliches Ankerelement, das den besagten Zwischenraum überbrückt. Das Ankerelement stützt sich schwenkbeweglich an einer der Polschuhplatten ab und ist zu der anderen Polschuhplatte beabstandet. Eine Bestromung der Spule hat die Erzeugung eines Magnetfeldes zur Folge, das unter anderem die beiden Polschuhplatten und das Ankerelement durchsetzt, sodass das Ankerelement zu einer bezüglich der Längsache der Spule quer orientierten Arbeitsbewegung angetrieben wird. Diese Arbeitsbewegung ist nutzbar, um ein Ventilglied eines Magnetventils zu betätigen.

Die Herstellung des bekannten Ventilantriebes setzt voraus, dass die Spule extern auf einen separaten Tragkörper gewickelt und erst anschließend mit der Jochstruktur vereinigt wird. Dadurch ist die Herstellung relativ aufwendig und das nutzbare Volumen der Spule ist durch den separaten, eine gewisse Eigenfestigkeit zur Verfügung stellenden Tragkörper reduziert.

Aus der EP 2 016 319 B1 ist ein Magnetventil bekannt, dessen elektromagnetischer Antrieb eine sich auf einen H-förmig gestalteten Spulenträger beschränkende Jochstruktur aufweist, die keine Polschuhplatten besitzt. Um hier die Grundfläche des zwischen dem Ankerelement und der Jochstruktur erforderlichen Arbeitsluftspaltes ausreichend groß bemessen zu können, da der Arbeitsluftspalt wesentlichen Einfluss auf die erzielbare Antriebskraft hat, bedarf es einer Jochstruktur mit relativ dicken seitlichen Jochplatten, was die Baugröße der Jochstruktur und mithin des gesamten Ventilantriebes nachteilig vergrößert.

Der Erfindung liegt die Aufgabe zugrunde, Maßnahmen zu treffen, die eine kostengünstige Realisierung eines kompakten elektromagnetischen Ventilantriebes ermöglichen.

Zur Lösung dieser Aufgabe ist bei einem Ventilantrieb der eingangs genannten Art vorgesehen, dass jede Polschuhplatte als bezüglich des Spulenträgers gesonderter Polschuh-Plattenkörper ausgebildet und durch gesonderte Befestigungsmaßnahmen mit der ihr zugeordneten seitlichen Jochplatte verbunden ist.

Die mit dem Spulenträger verbundenen Polschuhplatten definieren in den zwischen der Jochstruktur und dem Ankerelement Vorhandenen Arbeitsluftspalten relativ große Polflächen für den Durchtritt des Magnetfeldes. Auf diese Weise können hohe Betätigungskräfte erzielt werden. Da die Polschuhplatten die Spule flarikieren, sich also in Achsrichtung der Spulenträger-Hauptachse jeweils ein Stückweit entlang des Außenumfanges der Spule erstrecken, wirkt sich die Vergrößerung der Polflächen nicht auf die Gesamtbreite der Jochstruktur aus, die folglich in Achsrichtung der Spulenträger-Hauptachse sehr schmal ausgeführt werden kann. Indem die Polschuhplatten nicht einstückig mit den seitlichen Jochplatten ausgeführt, sondern diesbezüglich als gesonderte und bevorzugt einstückige Polschuh-Plattenkörper ausgebildet sind, besteht die vorteilhafte Möglichkeit, den Spulendraht zur Herstellung der Spule unmittelbar auf den Jochkern aufzuwickeln, bevor die Polschuh-Plattenkörper mittels geeigneter Befestigungsmaßnahmen nachträglich an den seitlichen Jochplatten befestigt werden. Die Befestigung der Polschuh-Plattenkörper an den seitlichen Jochplatten geschieht in einer Weise, die den magnetischen Fluss begünstigt, wobei insbesondere vorgesehen ist, dass die Polschuh-Plattenkörper an der jeweils zugeordneten seitlichen Jochplatte direkt anliegen. Als bevorzugte Befestigungsmaßnahme kommt insbesondere eine Schweißverbindung in Frage, vorzugsweise eine Laserschweißverbindung. Bevorzugt wird die Schweißverbindung nur punktuell ausgeführt, was die Herstellungsdauer und folglich die Herstellungskosten gering hält. Zusätzlich oder alternativ besteht auch die vorteilhafte Möglichkeit, die Polschuh-Plattenkörper durch eine Schraubverbindung und/oder eine Nietverbindung und/oder eine Klebeverbindung und/oder durch eine auf Blechumformung basierende Verbindung an der zugeordneten seitlichen Jochplatte zu befestigen. Die Blechumformverbindung erfolgt beispielsweise durch ein Umbiegen von Laschen und/oder durch Crimpen.

Ein vorteilhaftes Verfahren zur Herstellung des Ventilantriebes sieht vor, dass die Spule auf den Jochkern aufgewickelt wird, bevor anschließend die Polschuh-Plattenkörper mittels entsprechender Befestigungsmaßnahmen an den seitlichen Jochplatten des Spulenträgers angebracht werden.

Ein erfindungsgemäßes Magnetventil ist mit einem elektromagnetischen Ventilantrieb ausgestattet, der in dem oben beschriebenen Sinne ausgebildet ist und der zweckmäßigerweise unter Anwendung des vorgenannten Verfahrens hergestellt ist. Das Magnetventil verfügt darüber hinaus über ein bewegliches Ventilglied, das mit dem Ankerelement des Ventilantriebes bewegungsgekoppelt ist oder das unmittelbar von dem Ankerelement gebildet ist.

Vorteilhafte Weiterbildungen der Erfindung gehen aus den Unteransprüchen hervor.

Ein besonders kostengünstiger Aufbau mit optimaler Flussleitung für das magnetische Feld ergibt sich, wenn der H-förmige Spulenträger einstückig ausgebildet ist. Der einstückige Spulenträger verfügt über den Jochkern, an dem an beiden Stirnseiten einstückig jeweils eine der seitlichen Jochplatten angeformt ist.

Alternativ kann der H-förmige Spulenträger auch einen bezüglich der beiden seitlichen Jochplatten gesonderten und nachträglich fest mit den seitlichen Jochplatten verbundenen Jochkern aufweisen.

Der insbesondere stabförmig ausgebildete und bevorzugt zylindrisch konturierte Jochkern wird zweckmäßigerweise von jeder Jochplatte ringsum radial überragt.

Die Polschuh-Plattenkörper sind bevorzugt an rechtwinkelig zur Spulenträger-Hauptachse orientierte Stirnflächen der beiden seitlichen Jochplatten angesetzt. Auf diese Weise kann der gesamte Ringraum, der zwischen den beiden seitlichen Jochplatten um den Jochkern herum definiert ist, zur Aufnahme der Spule genutzt werden. Die Polschuh-Plattenkörper sind also bevorzugt außen auf den Spulenträger aufgesetzt.

Die beiden Polschuh-Plattenkörper können auch zumindest partiell zwischen den beiden seitlichen Jochplatten angeordnet sein. Entweder liegen sie dabei in Ihrer Gesamtheit in dem zwischen den beiden seitlichen Jochplatten definierten Zwischenraum oder sie erstrecken sich mit einem Teilbereich ihres Querschnittes in diesem Zwischenraum und mit dem anderen Teilbereich ihres Querschnittes außerhalb dieses Zwischenraumes. Im letztgenannten Fall haben sie an dem einer seitlichen Jochplatte zugewandten Endabschnitt zweckmäßigerweise eine abgestufte Außenkontur, wobei zweckmäßigerweise auch die jeweils zugeordnete seitlichen Jochplatte komplementär abgestuft konturiert ist, sodass die Polschuh-Plattenkörper und die seitlichen Jochplatten paarweise ineinander eingreifen können.

Besonders einfach herstellbar und zusammenbaubar ist die Jochstruktur, wenn die beiden Polschuh-Plattenkörper als integrale Bestandteile einer einstückigen Polschuh-Platteneinheit ausgeführt sind, die über einen den Zwischenraum definierenden Schlitz verfügt. Auf diese Weise ist zur Anbringung der beiden Polschuh-Plattenkörper am Spulenträger auf Seiten der Polschuhe nur ein einzige Bauteil handzuhaben, nämlich die Polschuh-Platteneinheit. Der schlitzförmige Zwischenraum ist insbesondere so gestaltet, dass er sich an seinen Schmalseiten bis in die unmittelbare Nähe des Außenrandes der Polschuh-Platteneinheit erstreckt, sodass die beiden die Poischuh-Plattenkörper definierenden Abschnitte der Polschuh-Platteneinheit nur am Rand durch schmale Stege miteinander verbunden sind und das Magnetfeld folglich gezwungen ist, zumindest zum größten Teil das benachbarte Ankerelement zu durchsetzen.

Alternativ besteht auch die Möglichkeit, die beiden PolschuhPlattenkörper als voneinander gesonderte individuelle Plattenkörper auszuführen, die unabhängig voneinander an jeweils einer der seitlichen Jochplatten befestigt sind und zwischen denen zweckmäßigerweise keine direkte Verbindung vorliegt.

Das Ankerelement ist zweckmäßigerweise plattenförmig ausgebildet. Es ist insbesondere so angeordnet, dass sich seine Plattenebene zumindest im Wesentlichen rechtwinkelig zu einer Achse erstreckt, die rechtwinkelig zur Spulenträger-Hauptachse ausgerichtet ist. Auf diese Weise ist die Grundfläche der zwischen dem Ankerelement und den Polflächen der Polschuhplatten definierten Arbeitsluftspalte mit besonders großen Abmessungen realisierbar.

Bei der Arbeitsbewegung des Ankerelementes handelt es sich zweckmäßigerweise um eine quer zur Spulenträger-Hauptachse orientierte translatorische Bewegung. In diesem Zusammenhang ist der Ventilantrieb so ausgebildet, dass das Ankerelement eine von beiden Polschuh-Plattenkörpern abgehobene Stellung einnehmen kann, in der zwei Arbeitsluftspalte vorliegen, und zwar ein Arbeitsluftspalt zwischen dem Ankerelement und jedem der beiden Polschuh-Plattenkörper.

Es besteht die alternative Möglichkeit, den Ventilantrieb so auszuführen, dass die Arbeitsbewegung des Ankerelementes eine rotative oder schwenkende Bewegung ist. In diesem Fall kann von einem Kippanker oder Klappanker gesprochen werden. Bei dieser Ausführungsform ist vorgesehen, dass das Ankerelement ständig an einem der beiden Polschuh-Plattenkörper anliegt und nur zwischen dem Ankerelement und dem anderen Polschuh-Plattenkörper ein aktiver Arbeitsluftspalt vorliegt.

Die Spule ist zweckmäßigerweise unmittelbar auf den Jochkörper aufgebracht und insbesondere aufgewickelt. In diesem Fall ist auf einen zusätzlichen, die Spule tragenden Trägerkörper verzichtet. Um zu verhindern, dass der Spulendraht dabei direkt mit dem elektrisch leitfähigen ferromagnetischen Material des Jochkörpers in Kontakt treten und Kurzschlüsse hervorrufen kann, wird der Jochkern zweckmäßigerweise elektrisch isolierend beschichtet, bevor er mit der Spule bewickelt wird.

Um eine definierte Grundstellung für das Ankerelement zu erhalten, ist es vorteilhaft, wenn zwischen den Polschuh-Plattenkörper und das bewegliche Ankerelement Federmittel eingegliedert sind, die das Ankerelement ständig im Sinne eines Wegdrückens von der Spule beaufschlagen. Für diese Federmittel sind unterschiedlichste Ausführungen möglich, beispielsweise in Gestalt einer oder mehrerer Schraubenfedern oder in Form einer Blattfeder. Eine Blattfeder hat den Vorteil, dass sie wegen ihrer geringen Bauhöhe besonders platzsparend integrierbar ist, sodass die Bauhöhe des Ventilantriebes insgesamt auf ein Minimum reduziert werden kann. Ein weiterer Vorteil der Blattfeder besteht darin, dass sie ausgebildet sein kann, um das Ankerelement bei seiner Arbeitsbewegung zu führen. Die Führung des Ankerelementes durch die Blattfeder kann insbesondere derart erfolgen, dass das Ankerelement nur einen Bewegungs-Freiheitsgrad hat, nämlich in Richtung der Polschuhplatten. Dadurch kann das Ankerelement vollständig reibungsfrei geführt werden, was sich positiv auf das Ansprechverhalten und die Leistung des Ventils auswirkt.

Der zwischen den einander zugewandten inneren Stirnflächen der beiden Polschuh-Plattenkörper vorhandene Zwischenraum kann ein freier, nur luftgefüllter Zwischenraum sein. Alternativ besteht aber auch die Möglichkeit, in diesen Zwischenraum ein bezüglich der Polschuh-Plattenkörper gesondertes Füllelement einzusetzen, das aus einem nicht-ferromagnetischen Material besteht. Dieses Füllelement sitzt insbesondere formschlüssig in dem Zwischenraum. Bevorzugt entspricht die Außenkontur des Füllelementes der Außenkontur des Zwischenraumes.

Das Füllelement kann ein Dichtelement sein, das die auf der Seite der Spule und auf der entgegengesetzten Seite der Polschuh-Plattenkörper liegenden Bereiche voneinander abdichtet. Dies ermöglicht einen Einsatz des Ventilantriebes bei einem Magnetventil in einer Weise, in der das zu steuernde Fluid nicht in Kontakt mit der Spule gelangen kann.

Das Füllelement kann zusätzlich oder alternativ auch ein Abstützelement für Federmittel bilden, die das Ankerelement von den Polschuh-Plattenkörpern wegdrücken. In diesem Zusammenhang kann das Füllelement eine oder mehrere Ausnehmungen haben, in die die Federmittel eingreifen können.

Das Füllelement ist zusätzlich oder alternativ auch als Führungselement für das Ankerelement nutzbar. Beispielsweise kann das Ankerelement einen Führungsvorsprung haben, der gleitverschieblich in eine Führungsausnehmung des zur Ankerführung dienenden Füllelementes eingreift.

Bevorzugt besteht das Füllelement aus einem Kunststoffmaterial.

Bei dem Füllelement kann es sich um ein separat hergestelltes und nachträglich in den Zwischenraum eingesetztes Bauteil handeln. Es besteht alternativ auch die Möglichkeit, den Zwischenraum zwischen den beiden Polschuh-Plattenkörpern durch Spritzgießen auszufüllen, sodass das Füllelement unmittelbar vor Ort innerhalb des Zwischenraumes durch ein urformendes Verfahren erzeugt wird.

Es ist vorteilhaft, wenn das Ankerelement relativ zu der Jochstruktur derart verdrehgesichert ist, dass es um eine mit der Richtung seiner Arbeitsbewegung zusammenfallende Bewegungsachse nicht relativ zur Jochstruktur verdreht werden kann. Dadurch ist sichergestellt, dass das Ankerelement bezüglich beider Polschuh-Plattenkörper seine ideale Relativposition unabhängig von der jeweiligen Schaltstellung beibehält.

Die Verdrehsicherung kann beispielsweise durch das Zusammenwirken mit einem optional in den Zwischenraum zwischen den beiden Polschuh-Plattenkörpern eingesetzten Füllelement realisiert werden, das als ein Ankerführungselement fungiert. Zusätzlich oder alternativ kann das Ankerelement zu seiner Linearführung auch von einer bezüglich der Jochstruktur ortsfesten Führungsfläche umrahmt sein.

Zweckmäßigerweise ist ein Sockelkörper vorhanden, auf den die Jochstruktur aufgesetzt ist und an dem die Jochstruktur befestigt ist. Zur Befestigung ist beispielsweise eine Klebeverbindung, aber auch jede andere Befestigungsmaßnahme möglich. Vorteilhaft ist es, wenn zwischen den Sockelkörper und die Jochstruktur ein Dichtungsrahmen eingegliedert ist. Vorzugsweise wird der Dichtungsrahmen als Verbindungsmittel zur dichten Verbindung der Jochstruktur und des Sockelkörpers genutzt.

In dem Sockelkörper sind zweckmäßigerweise mehrere Fluidkanäle ausgebildet, deren Verbindung untereinander mittels eines Ventilgliedes steuerbar ist, das mit Hilfe des Ankerelementes beweglich ist. Das Ventilglied kann ein bezüglich des Ankerelementes separates Bauteil sein, das mit dem Ankerelement bewegungsgekoppelt ist. Alternativ besteht auch die vorteilhafte Möglichkeit, das Ankerelement unmittelbar als Ventilglied zu nutzen bzw. auszubilden.

Die seitlichen Jochplatten des Spulenträgers der Jochstruktur können ohne weiteres massiv ausgeführt sein. Vorteilhafter wird es jedoch angesehen, wenn sie eine geblechte Struktur haben, sich also jeweils aus mehreren in der Achsrichtung der Spulenträger-Hauptachse aufeinandergeschichteten Blechelementen zusammensetzen.

Alternativ zu einer einstückigen Ausführung des Spulenträgers besteht auch die Möglichkeit, den Jochkern und die Jochplatten als voneinander gesonderte Komponenten herzustellen und nachträglich zusammenzufügen, wobei sie zweckmäßigerweise durch Laserschweißen aneinander fixiert werden.

Der Ventilantrieb kann mit einer schützenden Abdeckung ausgestattet sein, die zweckmäßigerweise auf den mit der Spule bestückten Spulenträger aufgesetzt ist.

Der Ventilantrieb kann als ein Einzelantrieb konzipiert sein, wobei der Spulenträger nur einen einzigen H-förmigen Strukturäbschnitt aufweist. Es besteht allerdings die vorteilhafte Möglichkeit, den Ventilantrieb als Mehrfachantrieb zu konzipieren, bei dem dann der Spulenträger eine mehrfache H-Struktur aufweist und mit mehreren Spulen bestückt ist. Beispielsweise verfügt der Spulenträger über eine zweifache H-Struktur mit insgesamt drei zueinander beabstandeten Jochplatten. Abgesehen von den beiden äußeren Jochplatten ist zweckmäßigerweise jede zwischen den äußeren Jochplatten liegende Jochplatte funktionell jeweils beiden benachbarten Spulenträgerabschnitten zugeordnet. Mit einem derartigen Aufbau eines Ventilantriebes lässt sich sehr kostengünstig eine über mehrere Magnetventile verfügende Ventilbatterie realisieren.

Unabhängig davon, ob der Ventilantrieb ein Einfachantrieb oder ein Mehrfachantrieb ist, ergibt sich durch die beiden außen liegenden Jochplatten eine ideale Wärmeabfuhr. Diese äußeren Jochplatten fungieren also in vorteilhafte Weise als Kühlkörper.

Bei allen Ausführungsformen kann die Spule im Querschnitt betrachtet kreisförmig oder rechteckförmig strukturiert sein. Entsprechendes gilt für den die Spule tragenden Jochkern.

Nachfolgend wird die Erfindung anhand der beiliegenden Zeichnung näher erläutert. In dieser zeigen:

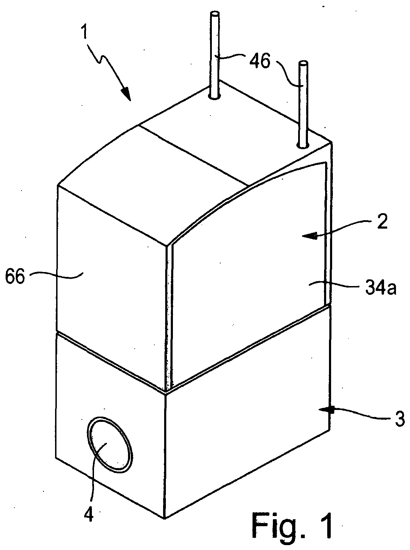

- Figur 1: eine bevorzugte Bauform eines erfindungsgemäßen Magnetventils, das mit einem erfindungsgemäßen elektromagnetischen Ventilantrieb bevorzugten Aufbau ausgestattet ist,
- Figur 2: das Magnetventil aus Figur 1 in einer Explosionsdarstellung, wobei der zusammengefügte, mit einer Spule bestückte Spulenträger auch nochmals gesondert illustriert ist,
- Figur 3: das Magnetventil gemäß Figuren 1 und 2 in einer teilweise aufgebrochenen Darstellung,

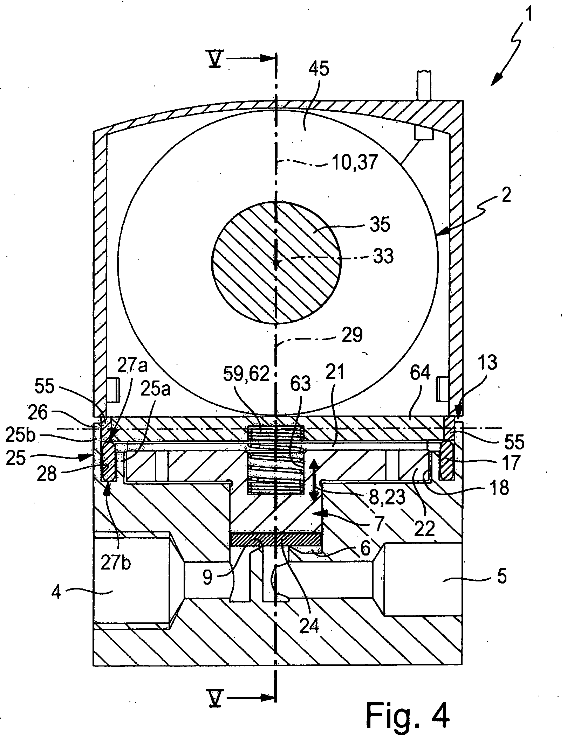

- Figur 4: einen Schnitt durch das Magnetventil gemäß Schnittebene IV-IV aus Figur 3, wobei die Schnittebene rechtwinkelig zur Achsrichtung der Spulenträger-Hauptachse verläuft, und
- Figur 5: einen weiteren Schnitt durch das Magnetventil in einer im Vergleich zu Figur 4 rechtwinkeligen Schnittebene gemäß Schnittlinie V-V aus Figur 4.

Aus der Zeichnung ist ein insgesamt mit Bezugsziffer 1 bezeichnetes Magnetventil 1 ersichtlich, das mit einem vorteilhaft ausgestalteten elektromagnetischen Ventilantrieb 2 ausgestattet ist.

Das Magnetventil 1 verfügt über einen Sockelkörper 3, der auch ein Bestandteil des Ventilantriebes 2 sein kann und in dem mehrere Fluidkanäle 4, 5 ausgebildet sind. Jeder Fluidkanal 4, 5 mündet einerseits zu einer Außenfläche des Sockelkörpers 3 und andererseits in eine im Innern des Sockelkörpers 3 ausgebildete Ventilkammer 6. In der Ventilkammer 6 befindet sich ein Ventilglied 7, das relativ zu dem Sockelkörper 3 eine durch einen Doppelpfeil angedeutete hin und her gehende Umschaltbewegung 8 ausführen kann.

Im Rahmen der Umschaltbewegung 8 kann das Ventilglied 7 in einer aus der Zeichnung ersichtlichen ersten Schaltstellung positioniert werden, in der es unter Abdichtung an einem Ventilsitz 9 anliegt und dadurch eine Fluidverbindung zwischen wenigstens zwei Fluidkanälen 4, 5 unterbricht. Weiterhin kann das Ventilglied 7 im Rahmen der Umschaltbewegung 8 in einer nicht gezeigten zweiten Schaltstellung positioniert werden, in der es von dem Ventilsitz 9 abgehoben ist und dadurch eine Fluidverbindung zwischen wenigstens zwei Fluidkanälen 4, 5 herstellt. In dieser zweiten Schaltstellung kann folglich ein Fluid, das in einen der Fluidkanäle 4 eingespeist wird, zum anderen Fluidkanal 5 überströmen.

Exemplarisch ist das Magnetventil 1 als ein 2/2-Wegeventil ausgeführt, bei dem die erste Schaltstellung eine SchließStellung und die zweite Schaltstellung eine Offenstellung ist. Bei einer abgewandelten Ausführungsform des Magnetventils handelt es sich um ein 3/2-Wegeventil, bei dem das Ventilglied 7 in Abhängigkeit von seiner Schaltstellung die Verbindung zwischen drei Fluidkanälen steuern kann. In diesem Fall ist in dem Sockelkörper 3 noch ein weiterer Ventilsitz ausgebildet, wobei das Ventilglied 7 in Abhängigkeit von seiner Schaltstellung mit entweder dem einen oder dem anderen Ventilsitz kooperiert.

Bezogen auf ein kartesisches Koordinatensystem mit einer x-Achse, einer zu der x-Achse rechtwinkeligen y-Achse und einer zu sowohl der x-Achse als auch der y-Achse rechtwinkeligen z-Achse verfügt das Magnetventil 1 über eine zu der z-Achse parallele Hauptachse 10. An einer in Achsrichtung der Hauptachse 10 orientierten Antriebsseite 13 ist der Sockelkörper 3 mit dem Ventilantrieb 2 bestückt. Der Ventilantrieb 2 ist dazu vorgesehen, die Umschaltbewegung 8 des Ventilgliedes 7 hervorzurufen und das Ventilglied 7 in der jeweils gewünschten Schaltstellung zu positionieren.

Exemplarisch ist die Umschaltbewegung 8 eine translatorische Bewegung, wobei es sich konkret um eine Linearbewegung in Achsrichtung der Hauptachse 10 handelt.

Der Ventilantrieb 2 verfügt über eine ferromagnetische Jochstruktur 14, die sich aus einem H-förmig gestalteten Spulenträger 15 und zwei fest mit dem Spulenträger 15 verbundenen Polschuhplatten 16a, 16b zusammensetzt. Diese Jochstruktur 14 ist, an der Antriebsseite 13 an den Sockelkörper 3 abgebaut und ist durch geeignete Befestigungsmaßnahmen mit dem Sockelkörper 3 zu einer Baueinheit zusammengefasst. Vorzugsweise erfolgt der Zusammenbau der Jochstruktur 14 und des Spulenträgers 15 unter Zwischenschaltung eines Dichtungsrahmens 17, also einer rahmenförmig gestalteten Dichtung. Die Elastizität bzw. Nachgiebigkeit des bevorzugt aus einem Elastomermaterial bestehenden Dichtungsrahmens 17 begünstigt die stufenlose Justierung des Hubes des Ankerelementes.

Der Sockelkörper 3 ist an der Antriebsseite 13 zweckmäßigerweise mit einer Ausnehmung 18 versehen, die durch die an der Antriebsseite 13 angesetzte Jochstruktur 14 abgedeckt ist und eine Aufnahmekammer 21 für ein bewegliches Ankerelement 22 des Ventilantriebes 2 bildet. Das Ankerelement 22 ist in der Aufnahmekammer 21 untergebracht und ist in der Lage, relativ zur Jochstruktur 14 und auch relativ zu dem Sockelkörper 3 eine durch einen Doppelpfeil angedeutete Arbeitsbewegung 23 auszuführen.

Vorzugsweise ist das Ventilglied 7 unmittelbar von dem Ankerelement 22 gebildet, was auf das Ausführungsbeispiel zutrifft. Insofern fallen exemplarisch die Arbeitsbewegung 23 des Ankerelementes 22 und die Umschaltbewegung 8 des Ventilgliedes 7 zusammen. Man kann auch sagen, dass das Ventilglied 7 und das Ankerelement 22 eine Baueinheit sind.

Insofern fungiert beim Ausführungsbeispiel die Aufnahmekammer 21 gleichzeitig als Ventilkammer 6.

Bei einem nicht gezeigten Ausführungsbeispiel ist das Ventilglied 7 gesondert bezüglich des Ankerelementes 22 ausgebildet, wobei allerdings das Ventilglied 7 mit dem Ankerelement 22 durch geeignete Maßnahmen bewegungsgekoppelt ist, sodass es zu der Umschaltbewegung 8 angetrieben wird, wenn das Ankerelement 22 die Arbeitsbewegung 23 ausführt.

Das Ventilglied 7 ist zweckmäßigerweise zum Zusammenwirken mit jedem Ventilsitz 9 mit einem Dichtelement 24 ausgestattet, das bei Einnahme der zugeordneten Schaltstellung unter Abdichtung am betreffenden Ventilsitz 9 anliegen kann.

Die Ausnehmung 18 ist von einer Seitenwand 25 des Sockelkörpers 3 umrahmt. Der Ventilantrieb 2 taucht zweckmäßigerweise mit seiner Jochstruktur 14 ein Stückweit in Achsrichtung der Hauptachse 10 in die Ausnehmung 18 ein und wird dabei von einem Zentrierabschnitt 26 der Seitenwand 25 an der Außenseite umschlossen. Auf diese Weise ergibt sich eine exakte Zentrierung des Ventilantriebes 2 bezüglich des Sockelkörpers 3.

Die Jochstruktur 14 könnte sich in Achsrichtung der Hauptachse 10 direkt an dem Sockelkörper 3 abstützen. Bevorzugt wird allerdings eine andere Bauart gewählt, nämlich derart, dass zwischen den Sockelkörper 3 und die Jochstruktur 14 der schon erwähnte Dichtungsrahmen 17 axial eingegliedert ist, sodass die Jochstruktur 14 in Achsrichtung der Hauptachse 10 unter Abdichtung auf einer oberen Stirnfläche 27a des Dichtungsrahmens 17 sitzt, der sich seinerseits mit einer unteren Stirnfläche 27b unter Abdichtung an dem Sockelkörper 3 abstützt.

Vorzugsweise lässt sich über die Höhenabmessungen des Dichtungsrahmens 17 die axiale Relativposition der Jochstruktur 14 bezüglich des Sockelkörpers 3 in Achsrichtung der Hauptachse 10 vorgeben. Dadurch ist gleichzeitig der maximale Hub des Ankerelementes 22 vorgebbar.

Zur Fixierung des Dichtungsrahmens 17 kann die Seitenwand 25 des Sockelkörpers 3 doppelwandig ausgeführt sein, was auf das Ausführungsbeispiel zutrifft. Aus der Doppelwandigkeit resultiert ein sich um die Hauptachse 10 herum erstreckender innerer Wandabschnitt 25a und ein den inneren Wandabschnitt 25a mit radialem Abstand umschließender äußerer Wandabschnitt 25b. Zwischen dem inneren Wandabschnitt 25a und dem äußeren Wandabschnitt 25b verläuft eine zur Antriebsseite 13 hin offene Ringnut 28, in die der Dichtungsrahmen 17 eingesteckt ist.

Exemplarisch wird der innere Wandabschnitt 25a in Achsrichtung der Hauptachse 10 von dem äußeren Wandabschnitt 25b überragt, wobei der den inneren Wandabschnitt 25a überragende Abschnitt des äußeren Wandabschnittes 25b den Zentrierabschnitt 26 bildet.

Das Ankerelement 22 ist zweckmäßigerweise relativ zur Jochstruktur 14 und auch relativ zu dem Sockelkörper 3 verdrehgesichert. Die Verdrehsicherung hat zur Folge, dass das Ankerelement 22 bezüglich seiner mit der Richtung der Arbeitsbewegung 23 zusammenfallenden Bewegungsachse 29 nicht verdreht werden kann. Die Bewegungsachse 29 fällt exemplarisch mit der Hauptachse 10 zusammen.

Die Verdrehsicherung resultiert vorzugsweise daraus, dass das Ankerelement 22 einen unkreisförmigen Umriss hat und mit geringem radialem Spielraum von einer bezüglich der Jochstruktur 14 ortsfesten Führungsfläche 32 umrahmt ist. Bevorzugt hat das Ankerelement 22 einen rechteckigen Umriss, was auch auf die Gestaltung der Führungsfläche 32 zutrifft. Das Ankerelement 22 ist mithin relativ zu der Führungsfläche 32 in Achsrichtung der Hauptachse 10 zur Ausführung der Arbeitsbewegung 23 bewegbar, während es gleichzeitig durch das Zusammenwirken mit der Führungsfläche 32 an einer Drehbewegung um die Hauptachse 10 gehindert ist.

Die Führungsfläche 32 ist vorzugsweise von der der Hauptachse 10 zugewandten Innenfläche des inneren Wandabschnittes 25a der Seitenwand 25 des Sockelkörpers 3 gebildet.

Das Ankerelement 22 hat zweckmäßigerweise einen rechteckigen Umriss, wobei es vorzugsweise eine längliche Gestalt hat. Die zueinander rechtwinkeligen Seitenränder des Ankerelementes 22 erstrecken sich zum einen in Achsrichtung der x-Achse und zum anderen in Achsrichtung der y-Achse. Bevorzugt hat das Ankerelement 22 in der Achsrichtung der y-Achse eine größere Länge als in Achsrichtung der x-Achse.

Zur Befestigung am Sockelkörper 3 ist die Jochstruktur 14 zweckmäßigerweise mit dem Sockelkörper 3 verklebt. Andere Befestigungsmaßnahmen sind ebenfalls möglich, wobei allerdings Befestigungsarten bevorzugt werden, die keine gesonderten Befestigungselemente benötigen.

Der H-förmig gestaltete Spulenträger 15 verfügt über zwei sich in Achsrichtung einer imaginären Spulenträger-Hauptachse 33 mit Abstand gegenüberliegende seitliche Jochplatten 34a, 34b, die auch als Jochwangen bezeichnet werden könnten. Beide Jochplatten 34a, 34b sind parallel zueinander ausgerichtet und erstrecken sich rechtwinkelig zu der Spulenträger-Hauptachse 33, deren Ausrichtung mit derjenigen der x-Achse zusammenfällt.

Die beiden seitlichen Jochplatten 34a, 34b sind durch einen Jochkern 35 der ferromagnetischen Jochstruktur 14 magnetisch leitend miteinander verbunden. Der Jochkern 35 ist bevorzugt stabförmig ausgeführt und hat zweckmäßigerweise einen runden und bevorzugt kreisförmigen Umriss, kann allerdings beispielsweise auch über einen quadratischen Querschnitt verfügen. Der Jochkern 35 hat eine längliche Erstreckung, die mit der Achsrichtung der Spulenträger-Hauptachse 33 zusammenfällt.

Die flächenhafte Ausdehnung der seitlichen Jochplatten 34a, 34b ist jeweils größer als die Querschnittsfläche des Jochkerns 35, sodass der Jochkern 35 von jeder seitlichen Jochplatte 34a, 34b ringsum radial überragt wird. Mit der radialen Richtung ist dabei die Richtung rechtwinkelig zu der Spulenträger-Hauptachse 33 gemeint.

Der ringsum vorhandene radiale Überstand der seitlichen Jochplatten 34a, 34b bezüglich des Jochkerns 35 resultiert in einem nach radial außen hin offenen Ringraum 36, der sich rings um den Jochkern 35 herum erstreckt und der axial durch die beiden sich gegenüberliegenden seitlichen Jochplatten 34a, 34b begrenzt ist.

Die Jochstruktur 14 hat eine Hochachse 37, die im am Sockelkörper 3 montierten Zustand des Ventilantriebes 2 mit der Hauptachse 10 zusammenfällt. Der Spulenträger 15 hat eine in Achsrichtung der Hochachse 37 orientierte Unterseite 38, die im am Sockelkörper 3 montierten Zustand dem Sockelkörper 3 zugewandt ist. Die beiden Polschuhplatten 16a, 16b sind zweckmäßigerweise an dieser Unterseite 38 an dem Spulenträger 15 angeordnet, was auf das Ausführungsbeispiel zutrifft.

Die beiden seitlichen Jochplatten 34a, 34b haben an ihrer Unterseite 38 zweckmäßigerweise jeweils eine untere Stirnfläche 41, die bevorzugt einen geradlinigen Verlauf hat. Jede untere Stirnfläche 41 erstreckt sich zweckmäßigerweise in einer zu der Hochachse 37 rechtwinkeligen Ebene. Exemplarisch liegt jede Polschuhplatte 16a, 16b an einer dieser unteren Stirnflächen 41 an.

Während beim Ausführungsbeispiel beide Polschuhplatten 16a, 16b außerhalb des von den beiden seitlichen Jochplatten 34a, 34b begrenzten Ringraumes 36 angeordnet sind, besteht alternativ auch die Möglichkeit zu einer Anordnung, bei der sich die beiden Polschuhplatten 16a, 16b jeweils zumindest teilweise innerhalb dieses Ringraumes 36 befinden.

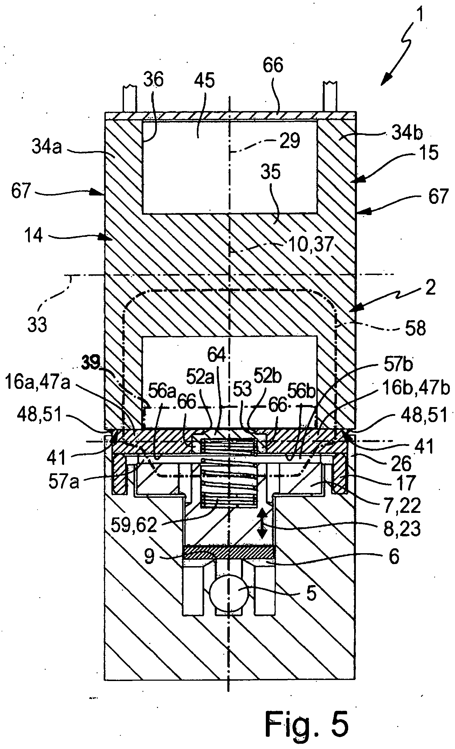

Beispielsweise können beide Polschuhplatten 16a, 16b vollständig in dem Ringraum 36 aufgenommen sein, wie dies in Figur 5 bei 39 strichpunktiert angedeutet ist. Dabei schließen die Polflächen 56a, 56b der Polschuhplatten 16a, 16b zweckmäßigerweise bündig mit den unteren Stirnflächen 41 der seitlichen Jöchplatten 34a, 34b ab. Diese Bauform ist besonders vorteilhaft bei geblechten Jochplatten 34a, 34b mit unebenen unteren Stirnflächen 41.

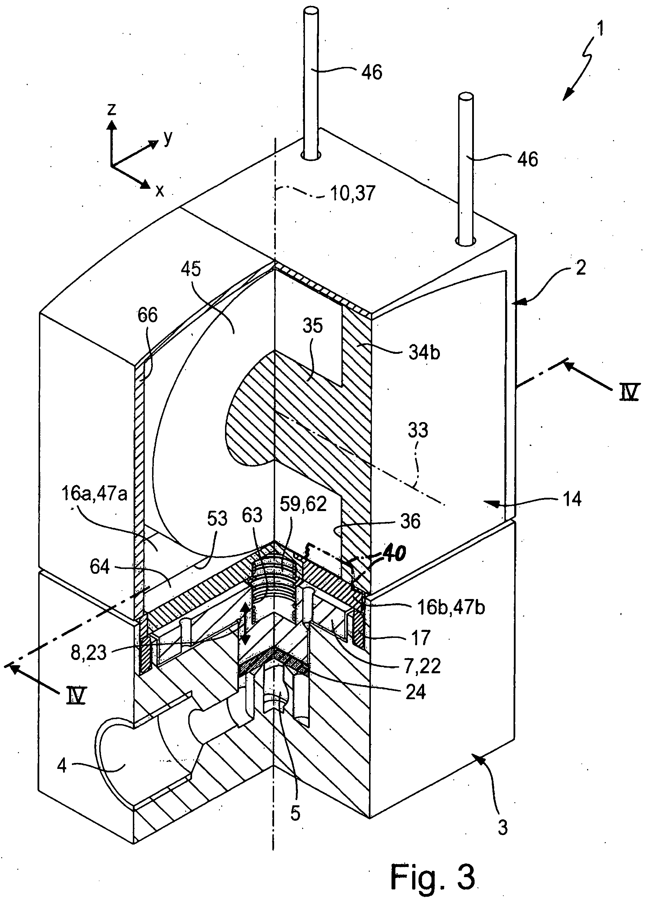

Bei einem anderen Ausführungsbeispiel tauchen die Polschuhplatten 16a, 16b mit nur einem Teil ihrer Bauhöhe zwischen die beiden seitlichen Jochplatten 34a, 34b hinein, sodass sie jeweils teils innerhalb und teils außerhalb des Ringraumes 36 zu liegen kommen. Dies ist in Figur 3 bei 40 strichpunktiert schematisch angedeutet. Hierbei empfiehlt sich eine abgestufte Konturierung jeder Polschuhplatte 16a, 16b und/oder der Unterseite 38 jeder seitlichen Jochplatte 34a, 34b, sodass der außerhalb des Ringraumes 36 liegende Abschnitt der Polschuhplatten 16a, 16b die untere Stirnfläche 41 der jeweils zugeordneten seitlichen Jochplatte 34a, 34b zumindest teilweise überdeckt. Dies schafft eine besonders große Übertragungsfläche für den magnetischen Fluss.

Zweckmäßigerweise hat jede seitliche Jochplatte 34a, 34b bei in Achsrichtung der Spulenträger-Hauptachse 33 erfolgender Betrachtung einen zumindest im Wesentlichen rechteckigen Umriss, wobei die untere Stirnfläche 41 einen Teil der Umrissfläche bildet. Exemplarisch ist die der unteren Stirnfläche 41 entgegengesetzte obere Stirnfläche 42 leicht konvex gewölbt. Die beiden in Achsrichtung der Hochachse 37 verlaufenden seitlichen Stirnflächen 43, 44 haben vorzugsweise jeweils eine geradlinige Erstreckung

In dem Ringraum 36 befindet sich eine elektrisch bestrombare Spule 45, die den Jochkern 35 koaxial umschließt. Zweckmäßigerweise ragt die Spule 45 an keiner Stelle über die seitlichen Jochplatten 34a, 34b hinaus. Die radiale Spulendicke ist insbesondere so gewählt, dass sich der Außenumfang der Spule 45 bis annähernd zu den Stirnflächen 41, 42, 43, 44 erstreckt.

Die Spule 45 enthält einen gewickelten Spulendraht, der mit zwei Anschlusselektroden 46 kontaktiert ist, die zweckmäßigerweise in jeweils einer der beiden seitlichen Jochplatten 34a, 34b verankert sind. Beispielsweise ist jede Anschlusselektrode, 46 elektrisch isoliert in eine Aufnahmebohrung eingesetzt, die in die obere Stirnfläche 42 eingebracht ist.

Ein wesentlicher Aspekt im Aufbau der Jochstruktur 14 wird darin gesehen, dass die beiden Polschuhplatten 16a, 16b als bezüglich des Spulenträgers 15 gesonderte Polschuh-Plattenkörper 47a, 47b ausgebildet sind. Jeder seitlichen Jochplatte 34a, 34b ist einer der beiden Polschuh-Plattenkörper 47a, 47b zugeordnet, wobei jede seitliche Jochplatte 34a, 34b mit dem zugeordneten Polschuh-Plattenkörper 47a, 47b fest verbundern ist. Die feste Vebindung resultiert aus gesonderten Befestigungsmaßnahmen 48, unter Verzicht auf eine einstückige Ausführung.

Jeder Polschuh-Plattenkörper 47a, 47b ist für sich gesehen zweckmäßigerweise einstückig ausgebildet.

Die gesonderten Befestigungsmaßnahmen 48 bestehen beim Ausführungsbeispiel aus jeweils einer Schweißverbindung 51. Vorzugsweise handelt es sich hierbei um eine Verbindung unter Verwendung eines energiereichen Schweißstrahls, insbesondere eines Laserstrahls oder eines Elektronenstrahls. Eine Laserstrahlschweißverbindung ist bevorzugt.

Die Schweißverbindung 51 wird zweckmäßigerweise nur punktuell vorgenommen. Auf diese Weise reduziert sich der Aufwand ohne nachteilige Auswirkungen auf die Festigkeit und/oder magnetische Eigenschaft.

Als alternative oder zusätzliche Befestigungsmaßnahmen kommen beispielsweise auch eine Schraubverbindung und/oder eine Nietverbindung und/oder eine Blechumformverbindung und/oder eine Klebeverbindung in Frage. Die Blechumformverbindung basiert insbesondere auf einem Umbiegen von Laschen und/oder wird durch sogenanntes Crimpen realisiert.

Jeder Polschuh-Plattenkörper 47a, 47b ist bei dem illustrierten bevorzugten Ausführungsbeispiel an die untere Stirnfläche 41 der zugeordneten seitlichen Jochplatte 34a, 34b angesetzt. Aus Figur 5 ist ersichtlich, dass es vorteilhaft ist, wenn der Polschuh-Plattenkörper 47a, 47b die untere Stirnfläche 41 der zugeordneten seitlichen Jochplatte 34a, 34b nicht vollständig überdeckt, sodass die vorteilhafte Möglichkeit besteht, die Schweißverbindung nach Art einer Kehlnaht im Übergangsbereich zwischen dem Umriss des Polschuh-Plattenkörpers 47a, 47b und der unteren Stirnfläche 41 auszuführen.

Jeder Polschuh-Plattenkörper 47a, 47b hat in Achsrichtung der y-Achse zweckmäßigerweise eine Länge, die der entsprechend gemessenen Länge der unteren Stirnfläche 41 entspricht.

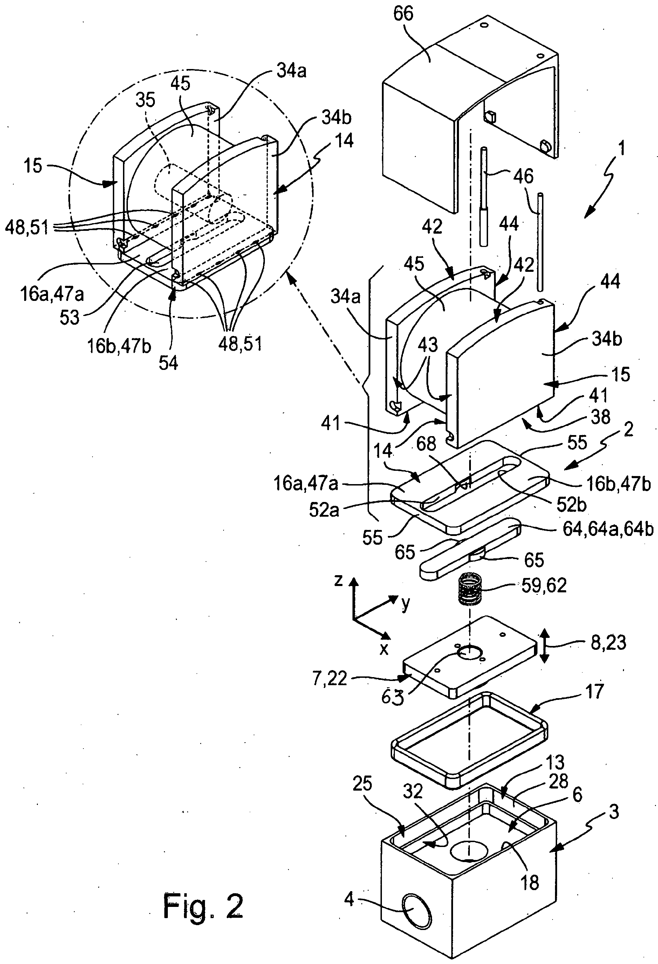

Jeder Polschuh-Plattenkörper 47a, 47b verfügt bei dem illustrierten bevorzugten Ausführungsbeispiel in Achsrichtung der Spulenträger-Hauptachse 33 über Breitenabmessungen, die größer sind als die Breite der unteren Stirnfläche 41 der zugeordneten seitlichen Jochplatte 34a, 34b. Ferner ist hier jeder Polschuh-Plattenkörper 47a, 47b so an der unteren Stirnfläche 41 der zugeordneten seitlichen Jochplatte 34a, 34b angeordnet, dass er ausgehend von der ihn tragenden seitlichen Jochplatte 34a, 34b ein Stückweit in Richtung zur gegenüberliegenden seitlichen Jochplatte 34b, 34a ragt und dabei ein Stückweit über den Ringraum 36 sowie die darin befindliche Spule 45 hinwegragt. Diese geometrischen Verhältnisse sind besonders gut aus Figur 5 und aus dem strichpunktiert umrahmten Bildausschnitt der Figur 2 zu ersehen. Zweckmäßigerweise ragt jeder Polschuh-Plattenkörper 47a, 47b gleich weit in Achsrichtung der Spulenträger-Hauptachse 33 über den Ringraum 36 hinweg.

Auf diese Weise ist die Spule 45 in einem der Unterseite 38 des Spulenträgers 15 zugeordneten Bereich von den beiden Polschuh-Plattenkörpern 47a, 47b flankiert.

Jeder der beiden Polschuh-Plattenkörper 47a, 47b hat eine dem jeweils gegenüberliegenden Polschuh-Plattenkörper 47b, 47a zugewandte innere Stirnfläche 52a, 52b. Diese beiden Stirnflächen 52a, 52b sind zueinander beabstandet, sodass sie einen Zwischenraum 53 begrenzen, der sich in der Achsrichtung der y-Achse zwischen den beiden Polschuh-Plattenkörpern 47a, 47b erstreckt. Der Zwischenraum 53 ist bevorzugt schlitzartig gestaltet. Wesentlich ist, dass in dem Zwischenraum 53 kein ferromagnetisches Material angeordnet ist. Der Zwischenraum 53 bildet also einen sehr hohen Widerstand für den magnetischen Fluss.

Bei der vorteilhaften Ausgestaltung des Ausführungsbeispiels sind die beiden Polschuh-Plattenkörper 47a, 47b integrale Bestandteile einer unter Bildung des Zwischenraumes 53 geschlitzten einstückigen Polschuh-Platteneinheit 54. Dabei sind die beiden Polschuh-Plattenkörper 47a, 47b von plattenförmigen Abschnitten der Polschuh-Platteneinheit 54 gebildet und im Bereich der beiden Schmalseiten des schlitzförmigen Zwischenraumes 53 durch je einen Verbindungssteg 55 fest miteinander verbunden. Der Zwischenraum 53 kann beispielsweise aus einem ursprünglich geschlossenen Plattenkörper ausgestanzt oder durch mechanische Bearbeitung herausgearbeitet sein.

Die Integration der beiden Polschuh-Plattenkörper 47a, 47b in eine einstückige Polschuh-Platteneinheit 54 hat den Vorteil einer vereinfachten Montage am Spulenträger 15, weil nur ein Bauteil justiert und befestigt werden muss. Die relative Zuordnung zwischen den beiden Polschuh-Plattenkörpern 47a, 47b ergibt sich aus der integralen Bauweise der Polschuh-Platteneinheit 54.

Bei einer alternativen Ausführungsform sind die beiden Polschuh-Plattenkörper 47a, 47b gesondert voneinander ausgebildete individuelle Plattenkörper, die jeweils unabhängig voneinander an der jeweils zugeordneten seitlichen Jochplatte 34a, 34b befestigt sind. Bei einer solchen Ausführungsform ist der zwischen den Polschuh-Plattenkörpern 47a, 47b befindliche schlitzförmige Zwischenraum 53 an den beiden Schmalseiten zweckmäßigerweise offen. Wie erwähnt, decken die beiden Polschuh-Plattenkörper 47a, 47b den Ringraum 36 im Bereich der Unterseite 41 des Spulenträgers 15 ab. Die dem Ringraum 36 und der darin befindlichen Spule 45 abgewandte Außenfläche jedes Polschuh-Plattenkörpers 47a, 47b bildet eine dem Ankerelement 22 zugewandte Polfläche 56a, 56b. Diese Polfläche ist relativ groß und ist insbesondere größer als die untere Stirnfläche 41 der jeweils zugeordneten seitlichen Jochplatte 34a, 34b.

Das bevorzugt plattenförmig ausgebildete Ankerelement 22 ist an der dem Ringraum 36 beziehungsweise der Spule 45 radial abgewandten Außenseite der beiden, Polschuh-Plattenkörper 47a, 47b angeordnet, sodass sie jeder der beiden Polflächen 56a, 56b in Achsrichtung der Hochachse 37 gegenüberliegt. Dabei überbrückt das Ankerelement 22 den Zwischenraum 53 in der Achsrichtung der Spulenträger-Hauptachse 33 und überlappt beide Polflächen 56a, 56b.

Aufgrund der die Arbeitsbewegung 23 ermöglichenden Beweglichkeit des Ankerelementes 22 kann das Ankerelement 22 eine Relativposition bezüglich der den Spulenträger 15 und die Polschuh-Plattenkörper 47a, 47b aufweisenden Jochstruktur 14 einnehmen, in der das Ankerelement 22 zur Polfläche 56a, 56b wenigstens eines der beiden Polschuh-Plattenkörper 47a, 47b beabstandet ist. Der dann vorliegende Abstand definiert einen Luftspalt, der als Arbeitsluftspalt 57a, 57b bezeichnet werden kann.

Beim Ausführungsbeispiel ist die Arbeitsbewegung 23 eine translatorische Bewegung beziehungsweise Linearbewegung, wobei das Ankerelement 22 eine von beiden Polschuh-Plattenkörpern 47a, 47b abgehobene erste Betriebsstellung einnehmen kann, in der jeder Polschuh-Plattenkörper 47a, 47b mit der ihm gegenüberliegenden Polfläche 56a, 56b einen Arbeitsluftspalt 57a, 57b definiert. Diese erste Betriebsstellung fällt beim Ausführungsbeispiel mit der ersten Schaltstellung des Ventilgliedes 7 zusammen.

Ausgehend von der ersten Betriebsstellung hat eine eine Bestromung hervorrufende elektrische Ansteuerung der Spule 45 die Ausbildung eines strichpunktiert angedeuteten Magnetfeldes 58 zur Folge, das beide Arbeitsluftspalte 57a, 57b überbrückt und das zur Folge hat, dass das Ankerelement 22 an die beiden Polflächen 56a, 56b herangezogen wird, sodass es eine an die beiden Polschuh-Plattenkörper 47a, 47b angenäherte oder sogar an diesen beiden Polschuh-Plattenkörpern 47a, 47b anliegende zweite Betriebsstellung einnimmt. Diese zweite Betriebsstellung entspricht beim Ausführungsbeispiel der zweiten Schaltstellung des Ventilgliedes 7.

Aufgrund der großen flächenmäßigen Überdeckung zwischen dem. Ankerelement 22 und jedem der beiden Polschuh-Plattenkörper 47a, 47b haben die Arbeitsluftspalte 57a, 57b in der zur Hochachse 37 beziehungsweise zur Hauptachse 10 rechtwinkeligen Ebene eine relativ große Ausdehnung, woraus hohe magnetische Anziehungskräfte resultieren. Mithin lassen sich mit Hilfe des Ventilantriebes 2 bei kompakten Abmessungen hohe Betätigungskräfte bezüglich des Ankerelementes 22 generieren.

Der Ventilantrieb 2 kann auch als Klappankerantrieb beziehungsweise Kippankerantrieb konzipiert sein. In diesem Fall ist die Arbeitsbewegung 23 eine rotatorische und/oder schwenkende Bewegung. Um dies zu erreichen, stützt sich das Ankerelement 22 ständig an einem der beiden Polschuh-Plattenkörper 47a, 47b ab, wobei der Kontaktbereich eine imaginäre Schwenkachse beziehungsweise Drehachse definiert, um die das Ankerelement 22 bei seiner Arbeitsbewegung 23 verschwenkt wird.

Vorzugsweise sind Federmittel 59 zwischen die Polschuh-Plattenkörper 47a, 47b und das bewegliche Ankerelement 22 eingegliedert, die das Ankerelement 22 ständig im Sinne eines Entfernens von der Spule 45 beaufschlagen. Die Federmittel 59 sind zweckmäßigerweise drückend wirkende Federmittel 59. Beim Ausführungsbeispiel sind solche Federmittel 59 vorhanden, die das Ankerelement 22 in Richtung der ersten Betriebsstellung vorspannen. Im deaktivierten Zustand der Spule 45 wird daher das Ankerelement 22 in der als Grundstellung fungierenden ersten Betriebsstellung gehalten.

Die Federmittel 59 des Ausführungsbeispiels bestehen aus einer Schraubendruckfeder 62, die seitens des Ankerelementes 22 im zentralen Bereich angreift. Damit sich die Baulänge der Federmittel 59 nicht nachteilig auf die Bauhöhe des Ventilantriebes 2 auswirkt, ist es von Vorteil, wenn im Ankerelement 22 eine zur Jochstruktur 14 hin offene Aufnahmevertiefung 63 ausgebildet ist, in die die Federmittel 59 eintauchen.

Es können ohne weiteres auch mehrere parallel wirkende Schraubendruckfedern 62 vorhanden sein.

Nicht abgebildet sind alternativ einsetzbare Federmittel 59, die von einer Blattfeder gebildet sind. Eine Blattfeder lässt sich wegen ihrer geringen Bauhöhe besonders platzsparend in den Ventilantrieb 2 integrieren.

Der zwischen den beiden Polschuh-Plattenkörpern 47a, 47b vorhandene schlitzförmige Zwischenraum 53 kann ein ungefüllter Freiraum sein. Aus mehreren Gründen ist es jedoch vorteilhaft, wenn der Zwischenraum 53 durch ein Füllelement 64 ausgefüllt ist. Ein solches Füllelement 64 ist beim Ausführungsbeispiel in den Zwischenraum 53 eingesetzt.

Das Füllelement 64 des Ausführungsbeispiels ist ein eigenständiges Bauteil, das insbesondere von der dem Spulenträger 15 abgewandten Unterseite her in den Zwischenraum 53 eingesetzt ist. Bei einem nicht gezeigten Ausführungsbeispiel ist das Füllelement 64 durch Spritzgießen unmittelbar in dem Zwischenraum 53 erzeugt worden. Auf diese Weise lässt sich eine besonders genaue formschlüssige Anpassung der Außenkontur des Füllelementes 64 an die Innenkontur des Zwischenraumes 53 erzielen.

Beim Ausführungsbeispiel ist durch das Füllelement 64 ein Dichtelement 64a gebildet, durch das der Zwischenraum 53 fluiddicht verschlossen ist. Dies hat den Vorteil, dass bei einer Nutzung des Magnetventils 1 ein Fluidübertritt aus der Ventilkammer 6 in den Ringraum 36 verhindert ist. Man erspart sich folglich zusätzliche Abdichtmaßnahmen im Bereich des Spulenträgers 15.

Bevorzugt übernimmt das Füllelement 64 auch noch die Funktion eines Abstützelementes 64b zur Abstützung der Federmittel 59 auf der Seite der Polschuh-Plattenkörper 47a, 47b. In diesem Zusammenhang ist das Füllelement 64 zweckmäßigerweise mit Abstützvorsprüngen 65 ausgestattet, die von unten her in Aussparungen 68 der Polschuh-Plattenkörper 47a, 47b eingreifen, durch die das Abstützelement 64b nach oben hin abgestützt wird. Auf diese Weise stützen sich die Federmittel 59 unter Zwischenschaltung des Abstützelementes 64b unmittelbar an den beiden Polschuh-Plattenkörpern 47a, 47b ab.

Nicht abgebildet ist eine weitere mögliche Funktionalität des Füllelementes 64 in einer Ausführung zur Führung des Ankerelementes 22 bei seiner Arbeitsbewegung 23. In diesem Fall kann das Füllelement 64 über eine nach unten hin offene Führungsausnehmung verfügen, in die das Ankerelement 22 mit mindestens einem Führungsvorsprung gleitverschieblich eintaucht.

Das Füllelement 64 besteht vorzugsweise aus einem Kunststoffmaterial. Jedenfalls verfügt es über nicht-ferromagnetische Eigenschaften, sodass trotz seines Einsatzes die Feldlinien des Magnetfeldes 58 dazu veranlasst werden, vorwiegend im Bereich der Polflächen 56a, 56b auszutreten beziehungsweise einzutreten und das Ankerelement 22 zu durchsetzen. Das Ankerelement 22 besteht wie die Jochstruktur 14 zumindest in den den Polschuh-Plattenkörpern 47a, 47b benachbarten Bereichen und vorzugsweise zur Gänze aus einem ferromagnetischen Material.

Die bezüglich der seitlichen Jochplatten 34a, 34b separate Ausgestaltung der Polschuh-Plattenkörper 47a, 47b bietet die vorteilhafte Möglichkeit, die Spule 45 durch einen Spulenwicklungsvorgang auf den zuvor bereitgestellten H-förmig strukturierten Spulenträger 15 aufzubringen. Bei noch nicht montierten Polschuh-Plattenkörpern 47a, 47b ist der Ringraum 36 entlang seines gesamten radialen Umfanges zugänglich und kann bequem mit der Spule bewickelt werden.

Der Spulendraht der Spule 45 wird insbesondere ohne ein zusätzliches Trägerelement direkt auf den Jochkern 35 aufgebracht. Allerdings kann der Jochkern 35 zuvor mit einem geeigneten Material beschichtet werden, insbesondere mit einem elektrisch isolierenden Material. Eine entsprechende Beschichtung ist auch an den einander zugewandten Innenflächen der beiden seitlichen Jochplatten 34a, 34b vorteilhaft vorhanden.

Ein vorteilhaftes Verfahren zur Herstellung des Ventilantriebes 2 sieht vor, dass die Spule 45 auf den Jochkern 35 aufgewickelt wird, bevor anschließend die Polschuh-Plattenkörper 47a, 47b entweder individuell oder als integrierte Bestandteile einer Polschuh-Platteneinheit 54 an den seitlichen Jochplatten 34a, 34b durch Befestigungsmaßnahmen 48 befestigt werden.

Der geschilderte Aufbau der Jochstruktur 14 ermöglicht in vorteilhafter Weise auch eine einstückige Ausbildung des Spulenträgers 15. Allerdings besteht ohne weiteres die Möglichkeit, die beiden seitlichen Jochplatten 34a, 34b und den Jochkern 35 als gesonderte Komponenten auszuführen, die durch geeignete Befestigungsmaßnahmen fest miteinander verbunden werden.

Im zusammengebauten Zustand des Magnetventils 1 stützt sich die Jochstruktur 14 zweckmäßigerweise mit der die Polflächen 56a, 56b definierenden Unterseite der Polschuh-Plattenkörper 47a, 47b an der oberen Stirnfläche 27a des Dichtungsrahmens 17 ab.

Der Ventilantrieb 2 verfügt zweckmäßigerweise auch noch über eine Abdeckhaube 66, die auf die Jochstruktur 14 aufgesetzt ist und die insbesondere die Spule 45 abdeckt. Die Abdeckhaube 66 hat zweckmäßigerweise eine U-förmige Gestalt und bedeckt im montierten Zustand die obere Stirnfläche 42 und die seitlichen Stirnflächen 43, 44 der beiden seitlichen Jochplatten 34a, 34b. Die in der Achsrichtung der Spulenträger-Hauptachse 33 voneinander abgewandten Außenflächen 67 der beiden seitlichen Jochplatten 34a, 34b werden von der Abdeckhaube 66 bevorzugt nicht abgedeckt. Dies begünstigt die Wärmeabfuhr und die Nutzung der seitlichen Jochplatten 34a, 34b als Kühlkörper.

Der Jochkern 35 ist beispielsweise ein mittig gedrehter oder auch kaltfließgepresster zylindrischer Körper. Er hat insbesondere einen einstückigen Aufbau. Die seitlichen Jochplatten 34a, 34b können auch monolithisch aufgebaut sein, haben zweckmäßigerweise aber einen mehrschichtigen Aufbau und bestehen jeweils aus mehreren, in Achsrichtung der Spulenträger-Hauptachse 33 aufeinandergeschichteten Blechelementen. Alle Komponenten des Spulenträgers 15 sind zweckmäßigerweise mittels Laserschweißpunkten aneinander fixiert.

## Patentansprüche

1. Elektromagnetischer Ventilantrieb, mit einer ferromagnetischen Jochstruktur (14), die einen H-förmig gestalteten Spulenträger (15) mit zwei sich in Achsrichtung einer imaginären Spulenträger-Hauptachse (33) beabstandet gegenüberliegenden seitlichen Jochplatten (34a, 34b) und einen die seitlichen Jochplatten (34a, 34b) verbindenden, sich in Achsrichtung der Spulenträger-Hauptachse (33) erstreckenden Jochkern (35) aufweist, wobei zwischen den beiden seitlichen Jochplatten (34a, 34b) eine den Jochkern (35) umschließende bestrombare Spule (45) angeordnet ist, die in einem Bereich ihres Außenumfanges von zwei jeweils mit einer der seitlichen Jochplatten (34a, 34b) fest verbundenen Polschuhplatten (16a, 16b) flankiert ist, die in der Achsrichtung der Spulenträger-Hauptachse (33) einander zugewandte, zwischen sich einen Zwischenraum (53) definierende innere Stirnflächen (52a, 52b) aufweisen, wobei an der der Spule (45) radial abgewandten Außenseite der beiden Polschuhplatten (16a, 16b) ein den Zwischenraum (53) überbrückendes, durch elektrische Ansteuerung der Spule (45) zu einer quer zu der Spulenträger-Hauptachse (33) orientierten Arbeitsbewegung (23) antreibbares Ankerelement (22) angeordnet ist, **dadurch gekennzeichnet, dass** jede Polschuhplatte (16a, 16b) als bezüglich des Spulenträgers (15) gesonderter Polschuh-Plattenkörper (47a, 47b) ausgebildet und durch gesonderte Befestigungsmaßnahmen (48) mit der ihr zugeordneten seitlichen Jochplatte (34a, 34b) verbunden ist.

2. Ventilantrieb nach Anspruch 1, **dadurch gekennzeichnet, dass** die gesonderten Befestigungsmaßnahmen (48) eine Schweißverbindung (51), insbesondere eine Laserschweißverbindung, umfassen, die insbesondere gepunktet ausgeführt ist.

3. Ventilantrieb nach Anspruch 1 oder 2, **dadurch gekennzeichnet, dass** die gesonderten Befestigungsmaßnahmen (48) eine Schraubverbindung und/oder eine Nietverbindung und/oder eine Blechumformverbindung und/oder eine Klebeverbindung umfassen.

4. Ventilantrieb nach einem der Ansprüche 1 bis 3, **dadurch gekennzeichnet, dass** der H-förmige Spulenträger einstückig ausgebildet ist oder dass der H-förmige Spulenträger einen bezüglich der beiden seitlichen Jochplatten (34a, 34b) gesonderten und nachträglich fest mit den seitlichen Jochplatten (34a, 34b) verbundenen Jochkern (35) aufweist

5. Ventilaritrieb nach einem der Ansprüche 1 bis 4, **dadurch gekennzeichnet, dass** die Polschuh-Plattenkörper (47a, 47a) an rechtwinkelig zur Spulenträger-Hauptachse (33) orientierte Stirnflächen (41) der beiden seitlichen Jochplatten (34a, 34b) angesetzt sind.

6. Ventilantrieb nach einem der Ansprüche 1 bis 5, **dadurch gekennzeichnet, dass** die beiden Polschuh-Plattenkörper (47a, 47a) zumindest partiell zwischen den beiden seitlichen Jochplatten (34a, 34b) angeordnet sind.

7. Ventilantrieb nach einem der Ansprüche 1 bis 6, dadurch gekenntzeichnet, dass die beiden Polschuh-Plattenkörper (47a, 47b) integrale Bestandteile einer unter Bildung des Zwischenraumes (53) geschlitzten einstückigen Polschuh-Platteneinheit (54) sind.

8. Ventilantrieb nach einem der Ansprüche 1 bis 6, **dadurch gekennzeichnet, dass** die beiden Polschuh-Plattenkörper (47a, 47b) voneinander gesonderte individuelle Plattenkörper sind, die unabhängig voneinander an jeweils einer der beiden seitlichen Jochplatten (34a, 34b) befestigt sind.

9. Ventilantrieb nach einem der Ansprüche 1 bis 8, **dadurch gekennzeichnet, dass** das Ankerelement (22) plattenförmig ausgebildet ist, wobei sich seine Plattenebene zweckmäßigerweise zumindest im Wesentlichen rechtwinkelig zu einer bezüglich der Spulenträger-Hauptachse (33) rechtwinkeligen Hochachse (37) der Jochstruktur (14) erstreckt.

10. Ventilantrieb nach einem der Ansprüche 1 bis 9, **dadurch gekennzeichnet, dass** die Arbeitsbewegung (23) des Ankerelementes (22) eine quer zur Spulenträger-Hauptachse (33) orientierte translatorische Bewegung ist, wobei das Ankerelement eine unter Bildung jeweils eines Arbeitsluftspaltes (57a, 57b) von beiden Polschuh-Plattenkörpern (47a, 47b) vollständig abgehobene Stellung einnehmen kann.

11. Ventilantrieb nach einem der Ansprüche 1 bis 10, **dadurch gekennzeichnet, dass** die Spule (45) unmittelbar auf den Jochkern (35) aufgebracht und insbesondere aufgewickelt ist.

12. Ventilantrieb nach einem der Ansprüche 1 bis 11, **dadurch gekennzeichnet, dass** Federmittel (59) zwischen die Polschuh-Plattenkörper (47a, 47b) und das bewegliche Ankerelement (22) eingegliedert sind, die das Ankerelement (22) ständig im Sinne eines Entfernens von der Spule (45) beaufschlagen.

13. Ventilantrieb nach einem der Ansprüche 1 bis 12, **dadurch gekennzeichnet, dass** in den zwischen den beiden Polschuh-Plattenkörpern (47a, 47b) vorhandenen Zwischenraum (53) ein aus einem nicht-ferromagnetischen Material bestehendes Füllelement (64) eingesetzt ist, das zweckmäßigerweise ein Dichtelement (64a) und/oder ein Abstützelement (64b) für Federmittel (59) und/oder ein Führungselement für das Ankerelement (22) bildet.

14. Ventilantrieb nach einem der Ansprüche 1 bis 13, **dadurch gekennzeichnet, dass** das Ankerelement (22) relativ zu der Jochstruktur (14) bezüglich einer mit der Richtung seiner Arbeitsbewegung (23) zusammenfallenden Bewegungsachse (29) verdrehgesichert ist, wobei es zweckmäßigerweise von einer bezüglich der Jochstruktur (14) ortsfesten Führungsfläche, (32) umrahmt ist.

15. Ventilantrieb nach einem der Ansprüche 1 bis 14, **dadurch gekennzeichnet, dass** er einen Sockelkörper (3) aufweist, auf den die Jochstruktur (14) aufgesetzt ist, wobei zweckmäßigerweise zwischen den Sockelkörper (3) und die Jochstruktur (14) ein Dichtungsrahmen (17) eingegliedert ist, der vorzugsweise die Höhe einer das Ankerelement (22) aufnehmenden Aufnahmekammer (21) vorgibt.

16. Ventilantrieb nach Anspruch 15, **dadurch gekennzeichnet, dass** in dem Sockelkörper (3) mehrere Fluidkanäle (4, 5) ausgebildet sind, deren Verbindung untereinander mittels eines Ventilgliedes (7) steuerbar ist, das mit dem Ankerelement (22) bewegungsgekoppelt oder unmittelbar von dem Ankerelement (22) gebildet ist.

17. Verfahren zur Herstellung eines Ventilantriebes (2) nach einem der Ansprüche 1 bis 16, **dadurch gekennzeichnet, dass** die Spule (45) auf den Jochkern (35) des Spulenträgers (15) aufgewickelt wird, bevor anschließend die Polschuh-Plattenkörper (47a, 47b) an den beiden seitlichen Jochplatten (34a, 34b) des Spulenträgers (15) angebracht werden.

18. Magnetventil mit einem elektromagnetischen Ventilantrieb nach einem der Ansprüche 1 bis 16, **dadurch gekennzeichnet, dass** es ein bewegliches Ventilglied (7) aufweist, das mit dem Ankerelement (22) bewegungsgekoppelt oder unmittelbar von dem Ankerelement (22) gebildet ist.

## Claims

1. Electromagnetic valve drive, comprising a ferromagnetic yoke structure (14) having an H-shaped coil support (15) with two lateral yoke plates (34a, 34b) placed opposite one another at a distance in the axial direction of an imaginary coil support main axis (33) and a yoke core (35) joining the lateral yoke plates (34a, 34b) and extending in the axial direction of the coil support main axis (33), wherein between the two lateral yoke plates (34a, 34b) there is provided a coil (45), which encloses the yoke core (35) and to which a current can be applied, which coil (45) is flanked in a region of its outer circumference by two pole shoe plates (16a, 16b), each of which is solidly connected to one of the lateral yoke plates (34a, 34b) and which have inner end faces (52a, 52b) which face one another in the axis direction of the coil support main axis (33) and define a gap (53) between themselves, wherein an armature element (22) which bridges the gap (53) and can be driven to perform a working movement (23) oriented transversely to the coil support main axis (33) by electrically activating the coil (45) is provided on the outside of the two pole shoe plates (16a, 16b) radially facing away from the coil (45), **characterised in that** each pole shoe plate (16a, 16b) is designed as a pole shoe plate body (47a, 47b) separate from the coil support (15) and connected to the associated lateral yoke plate (34a, 34b) using separate fastening measures (48).

2. Valve drive according to claim 1, **characterised in that** the separate fastening measures (48) comprise a welded joint (51), in particular a laser-welded joint, which is spot-welded in particular.

3. Valve drive according to claim 1 or 2, **characterised in that** the separate fastening measures (48) comprise a screw joint and/or a riveted joint and/or plate-formed joint and/or an adhesive joint.

4. Valve drive according to any of claims 1 to 3, **characterised in that** the H-shaped coil support is designed in one piece, or **in that** the H-shaped coil support comprises a yoke core (35), which is separate from the two lateral yoke plates (34a, 34b) and permanently joined subsequently to the lateral yoke plates (34a, 34b).

5. Valve drive according to any of claims 1 to 4, **characterised in that** the pole shoe plate bodies (47a, 47b) are fitted to end faces (41) of the two lateral yoke plates (34a, 34b) which are oriented perpendicular to the coil support main axis (33).

6. Valve drive according to any of claims 1 to 5, **characterised in that** the two pole shoe plate bodies (47a, 47b) are at least partially located between the two lateral yoke plates (34a, 34b).

7. Valve drive according to any of claims 1 to 6, **characterised in that** the two pole shoe plate bodies (47a, 47b) are integral parts of a single-piece pole shoe plate unit (54), which is slotted to form the gap (53).

8. Valve drive according to any of claims 1 to 6, **characterised in that** the two pole shoe plate bodies (47a, 47b) are separate individual plate bodies which are independently secured to one of the two lateral yoke plates (34a, 34b) each.

9. Valve drive according to any of claims 1 to 8, **characterised in that** the armature element (22) is of a plate-shaped design, its plate plane expediently extending at least substantially perpendicular to a vertical axis (37) of the yoke structure (14), which is perpendicular relative to the coil support main axis (33).

10. Valve drive according to any of claims 1 to 9, **characterised in that** the working movement (23) of the armature element (22) is a translational movement oriented transversely to the coil support main axis (33), wherein the armature element can adopt a position in which it is completely raised off the two pole shoe plate bodies (47a, 47b) while forming a working air gap (57a, 57b).

11. Valve drive according to any of claims 1 to 10, **characterised in that** the coil (45) is directly mounted on and in particular wound onto the yoke core (35).

12. Valve drive according to any of claims 1 to 11, **characterised in that** spring means (59) are incorporated between the pole shoe plate bodies (47a, 47b) and the movable armature element (22) to load the armature element (22) constantly towards a removal from the coil (45).

13. Valve drive according to any of claims 1 to 12, **characterised in that** a filler element (64) made of a non-ferromagnetic material and expediently forming a sealing element (64a) and/or a support element (64b) for spring means (59) and/or a guide element for the armature element (22) is installed into the gap (53) between the two pole shoe plate bodies (47a, 47b).

14. Valve drive according to any of claims 1 to 13, **characterised in that** the armature element (22) is secured against rotation relative to the yoke structure (14) in respect to an axis of motion (29) which coincides with the direction of its working movement (23), being expediently framed by a guide surface (32) which is stationary relative to the yoke structure (14).

15. Valve drive according to any of claims 1 to 14, **characterised in that** it comprises a base body (3) on which the yoke structure (14) is placed, wherein a seal frame (17) which preferably predetermines the height of a location chamber (21) accommodating the armature element (22) is expediently incorporated between the base body (3) and the yoke structure (14).

16. Valve drive according to claim 15, **characterised in that** a plurality of fluid passages (4, 5) is formed in the base body (3), the interconnection of which fluid passages (4, 5) is controllable by means of a valve member (7), which is motion-coupled to the armature element (22) or directly represented by the armature element (22).

17. Method for producing a valve drive according to any of claims 1 to 16, **characterised in that** the coil (45) is wound onto the yoke core (35) of the coil support (15) before the pole shoe plate bodies (47a, 47b) are then mounted on the two lateral yoke plates (34a, 34b) of the coil support (15).

18. Solenoid valve with an electromagnetic valve drive according to any of claims 1 to 16, **characterised in that** it comprises a movable valve member (7), which is motion-coupled to the armature element (22) or directly represented by the armature element (22).

## Revendications

1. Entraînement de vanne électromagnétique, comprenant une structure de culasse (14) ferromagnétique, qui présente un support de bobine (15) configuré de manière à présenter une forme en H, avec deux plaques de culasse (34a, 34b) latérales se faisant face à distance dans une direction axiale d'un axe principal de support de bobine (33) imaginaire et un noyau de culasse (35) reliant les plaques de culasse (34a, 34b) latérales, s'étendant dans une direction axiale de l'axe principal de support de bobine (33), dans lequel une bobine (45) pouvant être alimentée en courant entourant le noyau de culasse (35) est disposée entre les deux plaques de culasse (34a, 34b) latérales, laquelle bobine est flanquée, dans une zone de sa périphérie extérieure, respectivement de deux plaques de pièce polaire (16a, 16b) reliées de manière solidaire à l'une des plaques de culasse (34a, 34b) latérales, lesquelles présentent dans la direction axiale de l'axe principal de support de bobine (33), des surfaces frontales (52a, 52b) intérieures tournées les unes vers les autres, définissant entre elles un espace intermédiaire (53), dans lequel est disposé, au niveau du côté extérieur, opposé radialement à la bobine (45), des deux plaques de pièce polaire (16a, 16b), un élément d'ancrage (22) surmontant l'espace intermédiaire (53), pouvant être entraîné par un pilotage électrique de la bobine (45) en un déplacement de fonctionnement (23) orienté de manière transversale par rapport à l'axe principal de support de bobine (33), **caractérisé en ce que** chaque plaque de pièce polaire (16a, 16b) est réalisée sous la forme d'un corps de plaque de pièce polaire (47a, 47b) séparé par rapport au support de bobine (15) et est reliée, par des mesures de fixation (48) séparées, à la plaque de culasse (34a, 34b) latérale qui lui est associée.

2. Entraînement de vanne selon la revendication 1, **caractérisé en ce que** les mesures de fixation (48) séparées comprennent une liaison par soudage (51), en particulier une liaison par soudage au laser, qui est réalisée en particulier en pointillés.

3. Entraînement de vanne selon la revendication 1 ou 2, **caractérisé en ce que** les mesures de fixation (48) séparées comprennent une liaison par vissage et/ou une liaison par rivetage et/ou une liaison par mise en forme de tôle et/ou une liaison par collage.

4. Entraînement de vanne selon l'une quelconque des revendications 1 à 3, **caractérisé en ce que** le support de bobine présentant une forme de H est réalisé d'un seul tenant, ou **en ce que** le support de bobine présentant une forme de H présente un noyau de culasse (35) séparée par rapport aux deux plaques de culasse (34a, 34b) latérales et relié ultérieurement de manière solidaire aux plaques de culasse (34a, 34b) latérales.

5. Entraînement de vanne selon l'une quelconque des revendications 1 à 4, **caractérisé en ce que** les corps de plaque de pièce polaire (47a, 47b) sont placés, au niveau de surfaces frontales (41) orientées à angle droit par rapport à l'axe principal de support de bobine (33), des deux plaques de culasse (34a, 34b) latérales.

6. Entraînement de vanne selon l'une quelconque des revendications 1 à 5, **caractérisé en ce que** les deux corps de plaque de pièce polaire (47a, 47b) sont disposés au moins en partie entre les deux plaques de culasse (34a, 34b) latérales.

7. Entraînement de vanne selon l'une quelconque des revendications 1 à 6, **caractérisé en ce que** les deux corps de plaque de pièce polaire (47a, 47b) font partie intégrante d'une unité de plaques de pièce polaire (54) d'un seul tenant fendue en formant l'espace intermédiaire (53).

8. Entraînement de vanne selon l'une quelconque des revendications 1 à 6, **caractérisé en ce que** les deux corps de plaque de pièce de vanne (47a, 47b) sont des corps de plaque individuels séparés les uns des autres, qui sont fixés indépendamment les uns des autres au niveau respectivement d'une des deux plaques de culasse (34a, 34b) latérales.

9. Entraînement de vanne selon l'une quelconque des revendications 1 à 8, **caractérisé en ce que** l'élément d'ancrage (22) est réalisé de manière à présenter une forme de plaque, dans lequel son plan de plaque s'étend de manière appropriée au moins sensiblement à angle droit par rapport à un axe vertical (37), à angle droit par rapport à un axe principal de support de bobine (33), de la structure de culasse (14).

10. Entraînement de vanne selon l'une quelconque des revendications 1 à 9, **caractérisé en ce que** le déplacement de fonctionnement (23) de l'élément d'ancrage (22) est un déplacement de translation orienté de manière transversale par rapport à l'axe principal de support de bobine (33), dans lequel l'élément d'ancrage peut adopter une position totalement relevée depuis les deux corps de plaque de pièce polaire (47a, 47b) en formant respectivement un entrefer de fonctionnement (57a, 57b).

11. Entraînement de vanne selon l'une quelconque des revendications 1 à 10, **caractérisé en ce que** la bobine (45) est appliquée, et est en particulier enroulée, directement sur le noyau de culasse (35).

12. Entraînement de vanne selon l'une quelconque des revendications 1 à 11, **caractérisé en ce que** des moyens de ressort (59) sont incorporés entre les corps de plaque de pièce polaire (47a, 47b) et l'élément d'ancrage (22) mobile, lesquels moyens de ressort soumettent l'élément d'ancrage (22) à l'action d'une contrainte en permanence au sens d'un éloignement de la bobine (45).

13. Entraînement de vanne selon l'une quelconque des revendications 1 à 12, **caractérisé en ce qu'**est inséré, dans l'espace intermédiaire (53) présent entre les deux corps de plaque de pièce polaire (47a, 47b), un élément de remplissage (64) constitué d'un matériau non ferromagnétique, qui forme de manière appropriée un élément étanche (64a) et/ou un élément d'appui (64b) pour des moyens de ressort (59) et/ou un élément de guidage pour l'élément d'ancrage (22).

14. Entraînement de vanne selon l'une quelconque des revendications 1 à 13, **caractérisé en ce que** l'élément d'ancrage (22) est bloqué en rotation, vis-à-vis de la structure de culasse (14), par rapport à un axe de déplacement (29) coïncidant avec la direction de son déplacement de fonctionnement (23), dans lequel il est encadré de manière appropriée par une surface de guidage (32) stationnaire par rapport à la structure de culasse (14).

15. Entraînement de vanne selon l'une quelconque des revendications 1 à 14, **caractérisé en ce qu'**il présente un corps de socle (3), sur lequel la structure de culasse (14) est posée, dans lequel est incorporé, entre le corps de socle (3) et la structure de culasse (14), un cadre d'étanchéité (17), qui spécifie de préférence la hauteur d'une chambre de réception (21) recevant l'élément d'ancrage (22).

16. Entraînement de vanne selon la revendication 15, **caractérisé en ce que** sont réalisés, dans le corps de socle (3), plusieurs canaux de fluide (4, 5), dont la liaison entre eux peut être commandée au moins d'un organe de vanne (7), qui est formé de manière couplée en déplacement avec l'élément d'ancrage (22) ou directement par l'élément d'ancrage (22).

17. Procédé servant à fabriquer un entraînement de vanne (2) selon l'une quelconque des revendications 1 à 16, **caractérisé en ce que** la bobine (45) est enroulée sur le noyau de culasse (35) du support de bobine (15), avant que les corps de plaque de pièce polaire (47a, 47b) ne soient appliqués par la suite au niveau des deux plaques de culasse (34a, 34b) latérales du support de bobine (15).

18. Vanne magnétique comprenant un entraînement de vanne électromagnétique selon l'une quelconque des revendications 1 à 16, **caractérisée en ce qu'**elle présente un organe de vanne (7) mobile, qui est formé de manière couplée en déplacement avec l'élément d'ancrage (22) ou directement par l'élément d'ancrage (22).
